# EUROPEAN PATENT SPECIFICATION

(11) **EP 2 193 710 B1**
(45) Date of publication and mention of the grant of the patent: **09.04.2014**
(21) Application number: 08170814.1
(22) Date of filing: 05.12.2008
(51) Int. Cl.: A01N 3/00, A01N 25/04

(54) **Coating for lily bulbs**
Beschichtung für Lilienzwiebeln
Revêtement pour bulbes de lys

(43) Date of publication of application: 09.06.2010
(73) Proprietor: Patent 06-001 B.V., 2342 LB Oegstgeest (NL)
(72) Inventor: Van Velzen, Dick, 2343 BR, OEGSTGEEST (NL); Van der Luit, Johan, Louis, 2341 PD Oegstgeest (NL); Monster, Victor Steven, 2343 BR, OEGSTGEEST (NL); Van den Berg, Eugene Robert, 2341 KD, OEGSTGEEST (NL)
(74) Representative: De Hoop, Eric

(56) References cited:
- EP-A- 1 020 124
- WO-A-01/04195
- WO-A-2004/046229
- US-A- 3 997 674
- DATABASE WPI Week 198440 Thomson Scientific, London, GB; AN 1984-246905 XP002544655 & JP 59 148701 A (NITTO ELECTRIC IND CO) 25 August 1984 (1984-08-25)
- DATABASE WPI Week 200446 Thomson Scientific, London, GB; AN 2004-483312 XP002544654 & JP 2004 155922 A (NIPPON SYNTHETIC CHEM IND CO) 3 June 2004 (2004-06-03)

## Description

### BACKGROUND OF THE INVENTION

The invention relates to a composition for coating lily bulbs to inhibit degradation of the bulbs during storage, a method of inhibiting degradation of lily bulbs during storage, a container for storing lily bulbs and a use of the coating composition.

During storage of lily bulbs loss of viability, resulting in reduction of flower yield, results from ongoing loss of stored glycogen through continued, even if minimal, metabolism, and subsequent loss of produced water and carbon dioxide through evaporation and diffusion. The often minimal metabolic activity may be sharply increased by handling (packaging / sorting) resulting in a burst of carbon dioxide release. This continued metabolic activity will eventually result in reduced size and or number of flowers to be grown from a given bulb, reducing its value between 20 and 50% at (final) retail.

Furthermore, a number of infections may occur during storage. These presumably are present in low density or frequency in all bulbs already at harvest, but may and will spread through the stored bulbs. This again will seriously affect retail-prices of such bulbs. If this leads to the denial of an import license by a national phytopathological control agency, all value will be lost. Therefore, at present periodic controls and reexaminations of all stored bulbs need to take place, being very costly and labor intensive. Such controls regularly lead to a 10% loss of bulbs anyhow. The present "reading" of bulbs may in due course be replaced by technical innovations such as automated X-ray examination, but these options are at present only in a very early stage of development with, as yet, inconclusive outcomes of feasibility studies. Most importantly they will only reduce the costs of dealing with the losses rather than prevent or even effectively treat them.

The present commercially proven strategy to counter these two issues consists of cooling to temperatures to (just) below 0 °C which slows down metabolism and also aims to reduce the spread of disease. In addition, reduction of handling, dosing by immersion of lily bulbs with antibiotic solutions and in some instances reduced ventilation or storage in controlled atmosphere (reduced oxygen levels) conditions are in regular use. Modern studies of results of storage under Ultra-Low-Oxygen conditions have as yet not resulted in commercial application at any relevant scale. One of the reasons for this is that all bulbs in a single storage unit receive the same treatment which can not be interrupted for the release of the small quantities of bulbs usually required for sale to either growers of flowers or international export. In addition such standardized treatment does not allow for adaption to the highly variable requirements of lily bulbs of various species and strains related to variations in summer growth and harvest conditions.

Both for long term storage and for the purpose of early retail, the use of bags with variable degrees of permeability and/or perforation has been advocated. As the films in use consist of PE and other types of material, which for all purposes are to be considered virtually impermeable to oxygen, perforations are the only option for control. This, however, may well reduce the available oxygen but will result in accumulation of water vapor often enhancing the spread of parasitic fungal infections. Permeability high enough to prevent this usually does not provide sufficient reduction of oxygen access. Over-limitation of oxygen access carries with it the risk of "suffocation" of the bulbs. The margin of error between effect and risks on either side of the optimal permeability is effectively too narrow for any practical use.

In all these strategies the ratio of the bulb volume or biologically active tissue mass versus the bulb surface area is highly variable. The total biologically active mass per bag, and the available surface area are difficult to control in relation to the surface area of the bag and its permeability characteristic. Mathematical modeling is virtually unachievable and thus a separate solution is to be arrived at for every lily bulb / storage - packing volume. This is economically not achievable and an unwanted situation.

Thus the state of the art of storage of lily bulbs results in significant and unavoidable, but largely unpredictable losses due to combined effects of metabolic and infectious losses.

The use of any currently available bag-film as a barrier to control infection without suffocation, usually aggravates the problem due to the development of condensation which enhances growth and spread of most infectious microorganisms, especially mildews.

In the prior art no compositions for coating lily bulbs to inhibit degradation of the lily bulbs during storage are cited.

JP 59-148701 discloses the use of a coating based on polyvinyl alcohol, dissolved in water or mixtures of water and non-aqueous organic solvents of molecular weights between 10,000 and 82,000 D. The intent is to protect tulips during short periods of dry sales storage, transport and display against mechanical damage which would cause rotting, premature sprouting and loss of value. An earlier application, JP 51-146730, had a similar object, however, did not work with tulip bulbs of a less mature type as the coating did not adhere to or spread over the surface of bulbs resulting in poor attachment of a non-continuous protective layer. In JP 59-148701 saponification degrees of less than 85 mol% result in similar poor spreading and attachment of the coating. It is appreciated that higher viscosities, with resulting thicker layers (also with solid / solvent ratios of greater than 20 % weight / volume) will have suffocation effects on the bulbs. In case of irregular external bulb surfaces plasticizers (such as glycerin, ethylene glycol, propylene glycol and others) may be added to allow for improved friction resistance, and can be added at rates of 1 to 40 % weight / weight plasticizer to polyvinyl alcohol solid. Surfactants may be, or need to be added to achieve consistent thickness of completely attached coatings to, often water-repellant, surfaces of biological structures as required for mechanical protection which is optimal at thicknesses of 8 to 30 microns. Color dies may be added for identification or increase of sales attractiveness. Both examples of JP 59-148701, however, do not use any plasticizer, but only organic surfactants in order to improve adherence and spread of the thin coatings to achieve the thin layers required to avoid suffocation.

In none of these patent applications of coatings based on use of PV-alcohol is the intended use regulation or reduction of metabolic activity and there is no mention of any increased ability for long term storage (beyond the few weeks of shelf life required for the dry-sales period), increased bulb weights, or especially any effects on flower (tulip) products to be grown from such bulbs. Furthermore, mechanical protection during long term storage of lily and tulips alike is not relevant as these bulbs are left unmoved during the large number of months and are packed in large volumes (crates at 300 - 500 bulbs or boxes of boxes of 1x1x1 meter often containing up to 10,000 bulbs of a given genus).

Therefore there is still a strong need in industry for a method and material for storage of lily bulbs that does not have any of the disadvantages mentioned above or effectively corrects for them.

Objects of the invention are therefore to provide a storage means and storage method, that effectively controls a mini-environment surrounding each individual lily bulb, wherein the bulb is further protected from harmful influences, in which the storage life of the bulb is extended and whereby the bulbs remain appreciable to clients for a longer period of time. This appreciation is to be based on the outcome of planting such bulbs after any period of storage, with this increased potential heralded by reduced weight loss resulting in firm and hard presentation of lily bulbs rather than having become flaccid with limp petals.

### SUMMARY OF THE INVENTION

The objectives mentioned are achieved by a composition for coating lily bulbs comprising a polyvinyl alcohol (PVA) having a molecular weight of 4,000 to 14,000 in an amount of from 15 to 20% by weight of the composition, glycerol in an amount of from 1 to 5% by weight of the PVA within the composition and water, the composition being in the form of a sol. The glycerol functions as a respiratory control substance rather than its common application as a "spacing agent" aimed at increasing deformability. The invention further relates to a method for applying the sol composition to lily bulbs in order to create an enclosure around said bulbs. The coating formed has a high water permeability and a controllable low permeability to oxygen and carbon dioxide. Thereby, the amounts of water, oxygen and carbon dioxide are effectively controlled.

The coating of the invention prevents the loss of weight of the lily bulbs, due to water loss by evaporation, and reduces metabolic activity, further reducing weight loss. It decreases the risk of individual lily bulbs from being infected, decreases the amount of infection that may be present anyhow and forms a barrier to micro-organisms, such as bacteria and fungi, that would otherwise flourish on the bulbs. It creates a stable mini-environment for each of the individual bulbs, forms a selective barrier to sprouting enhancing UV light, which also may be harmful to bulbs while the coating does not adversely affect the bulbs otherwise.

The present coating sol, once applied, has considerable potential for reduction of water vapor loss but, due to its reduced but still sufficient CO₂ and O₂ permeability, will avoid death of bulb tissue and subsequent rotting, a well known complication of (ultra-) low oxygen storage. On the other hand, the coating is sufficiently permeable for water to prevent accumulation under the coating of too much water.

The coating may also be applied on lily bulbs before handling or transportation thereof. Nowadays, great care needs to be taken in these situations. For example lily bulbs are often packed in voluminous containers, supplemented with peat surrounding the bulbs, in order to prevent damage to same. Clearly it is very advantageous if packaging in peat is no longer needed, or even if this is required only to a limited extent, as is the case with the present coating.

The present coating, having the required permeability to water and gasses and effectively restricting metabolic breakdown of stored starch, fulfils the existing needs.

### Glycerol for controlling permeability to gasses rather than as "Plasticizer" or "Spacing Agent"

Many applications of the prior art require the admixture to polyvinyl alcohol (PVA) of substances in very low concentrations which alter the mechanical properties of the material during industrial processes such as extrusion, injection molding at high pressures, or thermoforming of molten polymer. Such substances lower the viscosity of molten polymer to allow these processes to take place at temperatures below which the polymer would break down or alter its molecular structure irreversibly. Thus such "plasticizers" may improve the mechanical final state of the polymer product such as reducing brittleness and the tendency to break. Sometimes the plasticizers are considered to create, under certain circumstances, novel properties. This is more common to occur with a different group of substances described as "spacing agents" rather than plasticizers. True "plasticizers" are considered to have an effect disproportional to their concentrations and in principle alter the molecular state of the base polymer. In contrast "spacing agents" are inactive substances, oily or highly deformable in nature that, when mixed in high concentrations in the polymer solution, strongly alter the mechanical properties during the usual industrial processes described above but may also alter such properties in films or solids developed by simple drying of the sol to a film. Although not well defined, a certain common understanding is that such agents have this function and these will be referred to hereinafter under the descriptive term "spacing agent". A commercially important reason for this being done by others is that many true and classic plasticizers have a bad reputation as being very toxic and have unpredictable effects when released, even in very low concentrations, into the environment such as occurs in leaking from waste polymer objects in waste or landfills. In contrast, achieving desired mechanical properties of a polymer film with vegetable oil carries no such connotations and those deliberately designing this, set store by using this term. However, the "spacing agent" glycerol used in the present invention, at the defined concentrations, develops an accidentally discovered series of properties, i.e. that of "respiratory control substance" (RCS) which do not depend on, or relate to its know mechanical properties and are novel in their understanding, application and results. The original mechanical properties do not form part of the effect found.

The effects of including glycerol into a film developing from a sol of polyvinyl alcohol (PVA) in water by drying in air, on the permeability for oxygen were studied after a serendipitous finding of an improvement of lily bulb firmness after storage when including glycerol only. The objective had been to ensure continuity of the film layer, at the risk of suffocating bulbs. However, contrary to expectations such films improved outcome of storage. Subsequent studies of film permeability related to glycerol content, when mounted on highly permeable PE films resulted in the following data.

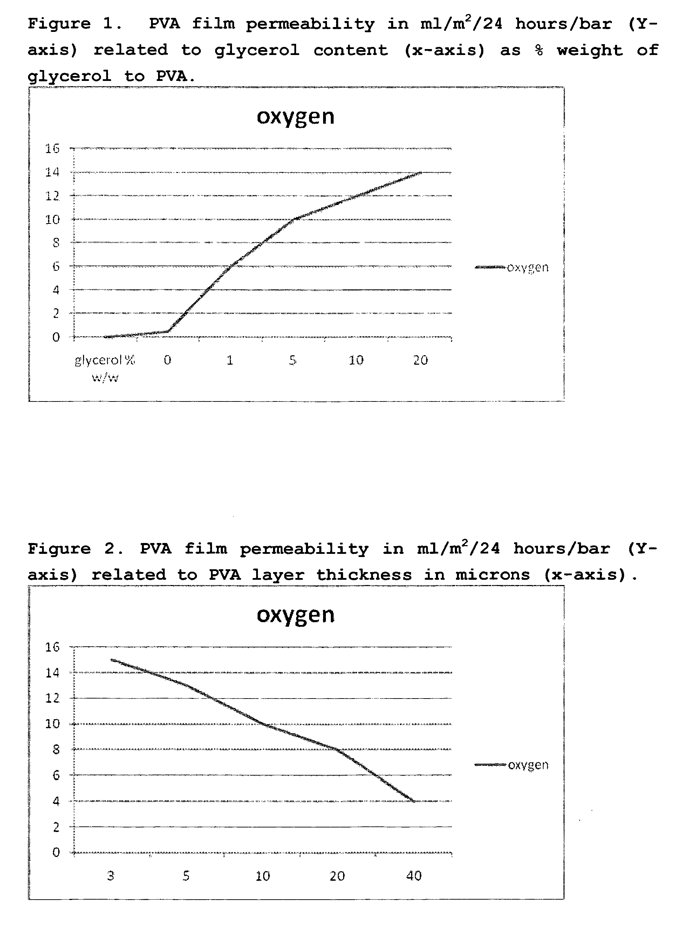

Fig. 1 shows the oxygen permeability of a PVA film as a function of glycerol content in the PVA film. From the results it can be derived that a near logarithmic relationship exists.

Fig. 2 shows the oxygen permeability of a PVA film as a function of the thickness of the film. From the results it can be derived that an inverse, near logarithmic relationship exists. These relationships have not been disclosed before.

The question arises whether any restriction of oxygen access to lily bulb tissue will in fact reduce metabolic breakdown of stored glycogen. As an alternative to studies using metabolic chambers, simple and direct measurements of bulbs tissue collected during field studies and of which content was routinely stored frozen down (at -80 °C) were carried out. All measured values were calculated as % of mean starting values resulting in the following data.

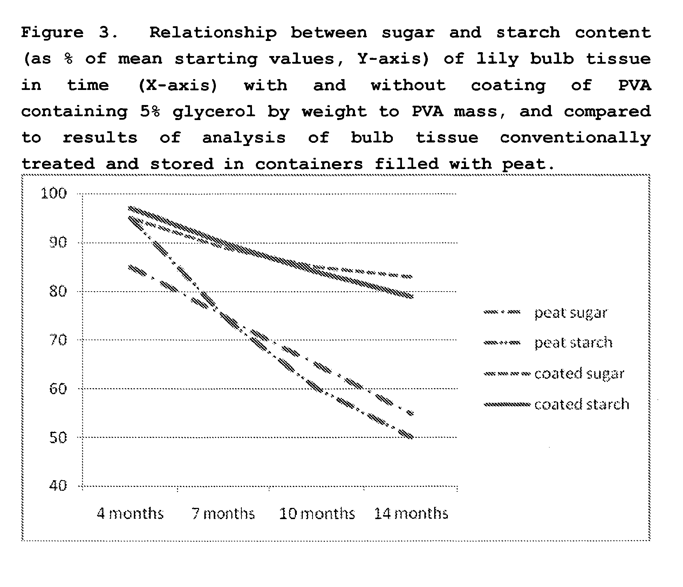

Fig. 3 shows the sugar and starch contents of lily bulb tissue as a function of time, comparing bulbs without a coating and bulbs having a PVA coating containing 5 % of glycerol.

It is evident from Fig. 3 that whereas sugar levels drop in time with storage, followed by gradual reduction of starch reserves, the use of coating results in a reduction of losses in both cases. This would suggest that restriction of oxygen access to lily bulb tissues as provided by the limited permeability of the coating has the desired biological effect of limiting metabolic activity and delay consumption of energy stores. Again no such data is available from any prior art.

The present invention uses glycerol in the coating composition in concentrations that mainly are well outside the range in which it is known to function similarly as a "plasticizer" and "spacing agent". This novel range of concentrations provides a novel effect.

However, there is as yet no additional terminology to describe substances that confer these properties as described in the present application, on films developing from PVA in water with admixture of glycerol, previously known only as a "spacing agent". The effect on permeability to gasses and vapors critical to control and allowing modulating of metabolic processes in living objects, such as the lily bulb, as yet has no descriptive term for this unique and unexpected property on the mixture once solidified. For the purpose of this application, glycerol will be defined as a Respiration Controlling Substance or RCS. This will be used throughout the following when not using the chemical descriptor with the specific aim of avoiding confusion in comparing the present invention with the prior art.

### DETAILED DESCRIPTION OF THE INVENTION

In a first aspect the invention relates to a composition for coating a lily bulb to inhibit degradation of the bulb during storage, which composition comprises a polyvinyl alcohol (PVA) having a molecular weight of 4,000-14,000 D in an amount of from 15 to 20% by weight of the composition, glycerol in an amount of from 1 to 5% by weight of the PVA within the composition and water, the composition being in the form of a sol.

The present PVA polymer is a resin which is commercially produced by the hydrolysis of polyvinyl acetate. The properties of the aqueous composition as well as the properties of the coating obtained using the composition of the invention may be varied as desired by adjusting the degree of hydrolysis and the molecular weight of the polyvinyl alcohol. The degree of hydrolysis for example, may suitably range from 50 to 95 %. Examples of such PVA polymers are for instance disclosed in WO 2004/046229 and WO 97/09379.

In W02004/046229 a bag made from a novel polyvinyl alcohol composition and film thereof have been disclosed. The composition is not a sol but a form of granulate. The film can however only be formed by standard processes, e.g. by extrusion and blowing. Further, the specification of these films is focused on, and limited to a very narrow range of variability with respect to its detailed formulation and its mechanical and structural properties. It is not designed for or defined by a need for permeability as is the present invention. In fact such PVA films have an almost negligible permeability for gasses, in particular oxygen and carbon dioxide.

Other PVA films and material thereof are also described in WO 97/09379. The PVA used therein typically has a molecular weight of 20,000 to 90,000 D. Further no composition is disclosed comprising water. In fact water seems quite detrimental for the production of PVA films according to this patent application (see e.g. page 9, 1. 9-15). As a solvent for e.g. spraying methyl ethyl keton (MEK) is used which on the basis of studies of the present inventors is clearly a toxic agent for lily bulbs.

The molecular weight of the polymer used in the sol influences the characteristics of the coating. If the Mw is too high (e.g. > 15,000), a brittle-like coating will be formed. It will have a greasy appearance, due to the spacing agent, which is then (in contrast to the novel experience at lower Mw's) believed to migrate to, or be forced ("sequestered") to the surface of the coating. If the Mw is too low (e.g. < 2,000), sequestration of the inclusions (the RCS) within the coating will occur, giving the coating a more gel-like appearance. Consequently, in both cases the desired permeability characteristics are not obtained.

Preferably the Mw of the polymer used in the sol is 8,000-12,000 D, a Mw of about 10,000 being even more preferred.

Preferably, from a practical point of view, the coating is water soluble. As such, the coating is easily washed off, if required prior to use such as in planting of bulbs. In this case, generous wetting of the planting substrate after planting is sufficient.

From an environmental point of view such water soluble coatings will be very rapidly biodegraded when formed from a primarily biodegradable PVA polymer, and therefore place a minimal burden on the environment. Furthermore, it is advantageous when the biodegradable PVA polymer is easily accessible for e.g. microorganisms, thereby increasing the rate of degradation. Therefore it is required that a biodegradable PVA polymer "falls apart" easily, a condition singularly met by becoming dissolved in water. If the coating itself forms an open structure, such as with the present invention, by the use of glycerol, as this is distributed within the coating film as would be a spacing agent, both the water dissolving ability and direct accessibility to micro-organisms will benefit. As such, the coating according to the invention may be totally degraded within a few months, in contrast to much longer periods, typically tens of years, for biodegradable PVA polymers of the state of the art. Even compared to a PVA polymer as such, the present coating dissolves significantly faster.

Preferably the coating dissolves in water at a relatively low temperature, such as 30 °C or below.

If the coating sol is directly applied to the lily bulbs, the sol is preferably not too warm, that is preferably below 30 °C and therefore under some distribution formulations, the polymer used needs to at least remain dissolved in water at such a temperature.

The biodegradable PV polymer, provided as either a granulate or as a powder, preferably dissolves at a temperature below values of 30 to 100 °C. With respect to the water content, practically it is required that the coating is applied as a sol to the lily bulbs. As the most preferred option is to apply the coating by spraying, the coating sol at the time of use must be pumpable, i.e. contain enough water. On the other hand, as the viscosity of the coating will have an effect on the layer thickness of the coating after drying with a concomitant effect on permeability after drying, the coating sol should not be too thin, otherwise the coating forming properties thereof as well as the final restrictive qualities may be in jeopardy or develop outside the intended margins. Within the scope of the invention also concentrated sol compositions are envisaged, that is with a low water content, such as less than 50 wt.%, preferably less than 30 wt.%. These concentrated sol compositions may therefore be transported easier, and can be diluted prior to use to the desired concentrations.

The composition according to the invention comprises the PVA in an amount of from 15 to 20 % by weight of the composition. Further the composition according to the invention comprises glycerol in an amount of from 1 to 5 % by weight of the PVA content. The amount of biodegradable PVA and the amount of glycerol will determine the permeability of the coating formed from the sol. The person skilled in the art will appreciate that, by varying the relative amounts of biodegradable PVA polymer and glycerol, the permeability to water and gasses may be controlled. If a coating less open to water is desired, the amount of polymer may be increased, whereas if a coating less open to gas is desired, less glycerol is required. In this respect, also the choice of the polymer plays a role.

As mentioned above the permeability to water should be sufficient to allow excess water (a product of metabolic breakdown of starches) to pass through the coating, once the coating is applied to a lily bulb. Such excess free water on the interfaces to the external environment (damp barrier), may be formed during sharp temperature changes. On the other hand, the coating once applied, should limit the amount of water loss of the bulbs.

Further, the coating should be relatively impermeable to gasses, specifically to oxygen and carbon dioxide. If so, the enclosure effectively controls the levels of such gasses within its confines, thereby forming stable conditions in the mini-environment enclosing the bulbs. The conditions in the mini-environment are beneficial for the crops with e.g. respect to storage lifespan and appreciation.

Typical physical values associated with the preferred permeability to gasses and water for such a coating are for instance, a water permeability of larger than 300 ml/m².bar.day, an oxygen permeability of less than 100 ml/m².bar.day, and a carbon dioxide permeability of less than 200 ml/m².bar.day, as measured at 25 °C, with a coating membrane thickness of 25 µm, and a relative humidity of 0 %.

Preferably the coating further acts as a UV-absorber and/or UV-reflector. As mentioned above, the coating supports the formation of a mini-environment. Such a mini-environment may protect the enclosed lily bulb from light, more specifically from UV-light. Light typically has a negative effect on the storage life and appearance of lily bulbs. If the coating acts as a UV-absorber and/or a UV-reflector, thereby effectively limiting the exposure of the bulbs to UV-light, storage life will be increased and the appearance of the bulbs will remain acceptable for a longer time. To this end, additional UV-blockers and/or UV-stabilizers may be added to the composition.

In a preferred embodiment the composition according to the invention comprises a PVA polymer which has a hydrolysis degree of 50 to 95 %.

Further various sorts of coatings may be formed according to the invention. More specific, coatings varying in temperature at which dissolution in water takes place can be formed. A so-called High Temperature coating dissolves in the range of 60-85 °C, and a so-called Low Temperature coating dissolves in the range of 5-40 °C. This depends among others on the degree of hydrolysis of the polymer used, which may vary from 50 % to 100 %. A high degree of hydrolysis, such as 95 %, will lead to a High Temperature coating. A low hydrolysis degree, such as 65 %, will lead to a Low Temperature coating.

It is noted that the viscosity of the sol composition is related to the molecular weight (Mw) of the polymer used. Typical Mw values are from 4,000 to 14,000. The viscosity further relates to the amount of polymer brought into dissolution. A large amount, or High Dose, will lead to more viscous solution than a small amount, or Low Dose. Typical values for the viscosity of the sol compositions are from 1-10 mPa.s (as determined according to the Hoeppler falling ball method, with a 4 wt.% solution at 20 °C). In this respect, preferably the polymer has a hydrolysis degree of between 70 and 85 % and molecular weights ranging from 8,000 to 12,000 D. Preferably the coating is formed from a blend of PVA and glycerol or granulates thereof.

The coating sol may further comprise one or more (water soluble) additives selected from the group of antimicrobiotics, fungicides, nutritional supplements, fertilisers, stabilizers, plasticizers, anti-parasitics, anti-infection means, biologically active compounds, growth enhancing compounds, compounds controlling biological active molecules, useful bacteria, useful fungi, useful enzymes, UV-stabilizers, UV-blockers, etc. Such additives can be chosen from any available and suitable additives. Such additives will be used in order to further improve the condition during storage of the lily bulbs and to further promote growth in a later stage of commercial use. Preferably the additives do not form a health or environmental risk. Preferably the additives are used in a total amount of less than 5 wt.%, based on the total PVA mass forming the sol or coating composition. For practical purposes, the additives are preferably water soluble, though other additives, which can be made watersoluble, such as by using a carrier or encapsulation, are also applicable. In other cases an emulsifier may be added. Based on experiences gleaned from the experiments and studies described in the illustrations below, such additives are released in a protracted manner, improving bioavailability thereof.

The coatings of the invention comprising various other ingredients which are releasable, surprisingly offer a further advantage of slowly, and thereby more effectively, releasing these ingredients. The use of these coatings thereby allows for a significant reduction in the amounts of ingredients required for any biological purpose, notably in some cases only 1 to 5 % of the amount required conventionally (e.g. short dipping aqueous solutions containing fungicides) is needed. Not only are such included ingredients more effective with respect to their intended purpose, but also a reduction of amounts required is achieved, reducing the costs involved therewith while simultaneously reducing any possible adverse effects on the environment associated with their use.

Preferred additives are selected from the group of anti-biotics, fungicides, pesticides, fertilizers and anti-parasitics.

The coating according to the invention preferably has a thickness after formation of 10 to 100 µm. It is clear that if the coating is too thick, permeability towards water will be hampered too much, and if the coating is too thin, the enclosure will be too open to gasses, and further a risk of uneven coatings, which may show ruptures or holes, arises.

Preferably, the composition of the invention is essentially free of any volatile solvents, especially free of alcohol solvents, since such solvents are toxic for lily bulbs.

In a second aspect the invention relates to a method for protecting lily bulbs, wherein the bulbs are coated with a coating according to the invention surrounding the bulbs, thereby creating a mini-environment. As mentioned above, such a mini-environment effectively controls the water and gas levels inside.

In a first embodiment the coating according to the invention is applied as a sol one or more times directly on the bulbs, thereby forming a coating. Preferably the sol is applied once, but may be applied three or more times. The coating sol can be applied by several techniques, preferably by spraying or immersion. When the polymer used has a high Mw and/or the sol has a high viscosity preferably an immersion technique is used for applying the sol, whereas with a polymer with a low Mw and/or when the sol has a low viscosity, preferably a spraying technique is used. Preferably the coating is allowed or made to dry after being applied.

In a second embodiment the coating according to the invention is applied to a package or forms a package enclosing the lily bulbs. In such a case, the coating also effectively forms a mini-environment enclosing the bulbs.

The coating according to the invention preferably has a thickness after formation of the coating of 10 too 100 µm, more preferably of 20-40 µm.

The coating may be applied to a package of any sort surrounding the bulbs. Preferably however the package itself has an open structure with respect to the passing of water and gasses such as oxygen and carbon dioxide, in order to allow relatively free migration of water and these gasses other than as determined by the chosen permeability of the coating as formulated and applied. Typically the coating according to the invention will supply the preferred enclosing conditions. Preferably therefore, the coating is applied to a paper bag. The paper bag can be any type of paper bag, such as grocery bags used for packaging.

In view of environmental issues the coating is preferably water soluble. Thereby, e.g. bacteria easily break down the coating after its use into harmless products, i.e. carbon dioxide and water.

Preferably the lily bulbs are selected from the standard sorting size range of 12 to 20 and upwards. However anyone skilled in the subject may appreciate that by direct extension, special formulations for much smaller seedling bulbs or bulb fragments intended as base material for amplification may be developed and will most likely have equivalent beneficial effects.

In a third aspect the invention relates to the use of a coating according to the invention, comprising a releasable compound for improving the release characteristics of said releasable compound. Preferably the releasable compound is selected from the group of anti-biotics, fungicides, pesticides, fertilizers and anti-parasitics.

As is noted above, the release characteristics of the coatings according to the invention are significantly better than those of the prior art. Therefore much less additives can be used, and still a similar effect thereof can be observed.

It is noted that the aspects and measures detailed in the description and figures can be applied together but also separately. Specifically this applies to the measures and aspects of the dependent claims.

The following examples are meant to illustrate the invention, and not to limit the invention.

### EXAMPLES

The following illustrations of principles, methods and effects have made use of several coating sol variants, and have used different methods of application. Additives, if any were used, have varied between experiments.

### Experiment I (not of the invention)

The effect of polyvinyl alcohol based sol as defined by water / weight loss of lily bulbs in long term storage.

### Methods:

Coating composition: Coating was prepared from polyvinyl alcohol granulate (Polyval Ltd, Milton Keynes, UK), formulated so as to have a dissolution temperature of 85 °C, a molecular weight of between 12,000 and 14,000 D. The PVA was used in an amount of 10 % by weight in water with addition of glycerol in an amount of 10 % by weight of the PVA. The granulate was dissolved in gently boiling tap water after 5 - 10 minutes of gentle stirring. The resultant sol was allowed to cool to room temperature (12-18 °C) for 24 hours before application and use.

Application/ coating: bulbs for testing were all coated by immersion in full strength coating, followed by manual removal of excess coating, dripping of by resting on screens for a minimum of 10 minutes and subsequent air drying at room temperature for 24 hours on a non-adhesive surface, before further assessments, or application of further coatings as part of experimental procedures.

Final thickness of a single coating was estimated to be between 15 and 25 microns based on polymer / solution used per calculated square unit of surface area of lily bulbs.

Study groups: 2 x 3 groups of 10 lily bulbs were used (see results Table 1) either not coated or coated with 1 or 2 layers of coating. Lily bulbs used were of type Lombardia, size 18-20, provided from routine sale stock approximately 4 weeks after harvest of that year. All lily bulbs were randomized to study groups and individually numbered for study of individual weight loss in time.

All bulbs were stored in a single crate without addition of peat, placed within a standard perforated polyethylene bag, at temperatures of -1.5 °C in a conventional commercial store room, routinely ventilated, for up to 6 months and monitored monthly for weight.

Assessments: In addition to monthly weighing of lily bulbs, with tables prepared for weights, weight loss as a percentage of starting weights or previous weights was calculated for each lily bulb. Means and Standard deviations were calculated for each group at each time point. Statistical analysis of probability of non-difference between mean normalized weights was calculated using the T-test.

### Results

**Table 1. Weight loss of lily bulbs coated with sol related to number of layers.**

| study group | non-coated | 1 layer of coating | 2 layers of coating |
|---|---|---|---|
| N= | 10 | 10 | 10 |
| mean starting weight in grams | 56 | 62 | 59 |
| weight range | 49-63 | 52-67 | 50-65 |
| mean % weight loss: | | | |
| 1 month | 5 | 3 | 3 |
| 2 months | 7 | 5 | 4 |
| 3 months | 11 | 7 | 6 |
| 4 months | 15 | 9 | 7 |
| 5 months | 20 | 13 | 10 |
| 6 months | 31 | 15 | 11 |
| T-test: coated versus non coated at 6 months: 1 layer p<0.01; 2 layers p<0.001 | | | |

### Conclusions

Coating with a polyvinyl alcohol-based sol formulated as described in the invention, results in significant protection against weight loss of commercially acquired lily bulbs under routine storage and operational conditions.

The effect is clearly dependent on time with an increase of the effect with increased layer thickness, suggesting a primary effect of the coating based on reduction of water loss from the lily bulb surface supporting the concept of mechanism.

### Experiment II

The effect on weight loss of lily bulbs in routine long term storage of coating varying in formulation of viscosity and RCS content.

### Methods:

Coating composition: Coating was prepared from polyvinyl alcohol solution (Wacker GmbH, Burghausen, Germany) formulated so as to have a dissolution temperature of 90 °C, a molecular weight of between 8,000 and 12,000 D. The PVA was used in an amount of 20, 10 not of the invention or 5 not of the invention % by weight in water with addition of glycerol in an amount of 10 not of the invention, 5 or 1 % by weight of the PVA. The stock solution was diluted and dosed with RCS by 10 - 20 minutes of gentle stirring. The resultant sol was allowed to settle out for purpose of homogenization at room temperature (12-18 °C) for 24 hours before application and use.

Application/ coating: bulbs for testing were all coated by immersion in full strength coating, followed by manual removal of excess coating, dripping of by resting on screens for a minimum of 10 minutes and subsequent air drying at room temperature for 24 hours on a non-adhesive surface, before further assessments.

Final thickness of a single coating was estimated to be between 11 and 40 microns based on polymer / solution used per calculated unit of square surface area per lily bulb.

Study groups: 10 groups of 20 lily bulbs were used (see results Table 2) either not coated or coated with one of 3 different coatings each varying additionally in relative glycerol content. Lily bulbs used were of type Lombardia, size 18-20, provided from routine sale stock approximately 4 weeks after harvest of that year. All lily bulbs were randomized to study groups, and stored in net sacks to maintain groups.

All bulbs were stored in a single crate without addition of peat, placed within a standard perforated polyethylene bag, at temperatures of -1.5 °C in a conventional commercial store room, routinely ventilated, for up to 6 months and monitored 3-monthly for weight.

Assessments: In addition to 3-monthly weighing of lily bulbs, with tables prepared for weights, weight loss as a percentage of starting weights or previous weights was calculated for each lily bulb. Means and Standard deviations were calculated for each group at each time point. Statistical analysis of probability of non-difference between mean normalized weights was calculated using the T-test.

### Results

**Table 2. Weight loss of lily bulbs coated with variable sols with variable proportional quantities of glycerol.**

| study group | non-coated | coating 20% w/v PVA in water | | | coating 10% w/v PVA in water (not of the invention) | | | coating 5% w/v PVA in water (not of the invention) | | |
|---|---|---|---|---|---|---|---|---|---|---|
| N= | 20 | 20 | 20 | 20 | 20 | 20 | 20 | 20 | 20 | 20 |
| glycerol content w/w PVA% | | 1 | 5 | 10 (not of the invention) | 1 | 5 | 10 | 1 | 5 | 10 |
| mean starting weight in grams: 67 grams | | | | | | | | | | |
| Normalized weight loss in % starting weight | | | | | | | | | | |
| 3 months | 18 | 7 | 8.5 | 9.5 | 7,5 | 9 | 10.5 | 9 | 11 | 14 |
| 6 months | 31 | 9 | 11 | 13 | 10 | 12 | 14 | 13 | 15 | 18 |
| T-Test: control versus coated combined: p<0.001; coating of 20 versus 5 % w/v of PV-alcohol: p<0.01; coating with 1% w/w PVA glycerol versus 10% w/w PVA of glycerol: p<0.05 | | | | | | | | | | |

### Conclusions

Coating with a PVA based sol formulated as described in the invention, results in significant protection against weight loss of commercially acquired lily bulbs under routine storage and operational conditions.
The effect is clearly dependent on time with an increase of the effect with increased layer thickness as a result of increased solid content of the coating solution, most likely resulting from increases in viscosity / layer thickness, and is equally increased by limiting the quantity of glycerol added suggesting a primary effect of the coating based on reduction of water loss from the lily bulb surface as well as an inhibitory effect on the metabolic breakdown of bulb starch.

### Experiment III (not of the invention)

A comparative study on the effect of a polyvinyl alcohol based sol with fungicides as an example of biologically active additives, as defined effects on water/weight loss and subsequent outgrowth and flower development of oriental lily bulbs as test model, under commercial operational and storage conditions.

### Methods:

Coating composition: A sol prepared from a polyvinyl alcohol granulate (Polyval Ltd, Milton Keynes, UK), as previously described in Experiment I.

Additives: Additives expected to provide protection against fungal infection based on effective bioavailability due to continued slow release of included fungicide at low dose (1/20^{th} of conventional dose / bulb).

Application, coating: Lily bulbs for testing were all coated by single immersion as previously described in both Experiment I and II.

Study groups: For study of the effect of coating on lily bulb weight loss in time, 3 groups of 2100 lily bulbs each, from the same stock as used for experiments I and II were used (see results Table 3): uncoated, coating only without additives and coating with inclusion of biologically active fungicides.

Within each group lilies were divided into subgroups of 700 bulbs each, to be studied at 5.5, 7 and 8.5 months of storage at -1 °C. All lily bulbs, of the same size class and of a single lot, were provided by a local lily grower and dealer.

After randomization to 3 study groups and 3 subgroups and coating, lilies for each study group were stored in either peat (at 200 / crate and with full strength disinfection with fungicides as normal operational procedure; controls), or as 250 bulbs / crate and without coating or disinfection (bare controls) or as 50 coated bulbs in a central layer on top of 100 and covered by 100 uncoated bulbs, not disinfected with fungicides (in-crate controls). Assessment: In addition to weighing of lily bulbs (per 10 bulbs) at time of withdrawal from long term storage, bulbs were scored for firmness, damage by fungal infection and signs of rotting.

Tables were prepared for weights per 10 bulbs, weight loss for whole group as a mean percentage of starting weights per 10 bulbs were calculated for each bulb group. Statistical analysis of probability of non-difference between mean normalized weight was calculated using T-test.

After scoring all bulbs were planted in standard planting crates and soil depth in greenhouses with controlled climate and lighting. Plants were assayed at approximately 100 days after planting for plant loss, stem length, plant weight and number of flowers per stem.

### Results

**Table 3. Mean weights/10 bulbs in grams of lily bulbs, dependent on polyvinyl alcohol based coating with / without inclusion - slow release of biologically active, low dose additives at 8.5 months of storage and average plant length, weight and flower number grown from these bulbs.**

| | bulb weight | Infection | plant length | plant weight | number of flowers |
|---|---|---|---|---|---|
| Conv. storage in peat (n=200) | 510 | + | 97 | 102 | 5.1 |
| Bare controls (n=250) | 630 | ++ | 103 | 103 | 5.7 |
| In-crate controls (n=200) | 630 | ++ | 102 | 104 | 5.8 |
| Coated test bulbs in same crate (n=50) | 670 | ++ | 103 | 105 | 6.2 |
| Coated test bulbs with inclusion of fungicide in same crate (n=50) | 695 | +/- | 103 | 104 | 7.2 |

Probability of non-difference of outcome between groups with respect to flower number: peat controls versus test bulbs: p < 0.005.

### Conclusions

Coating with a polyvinyl alcohol based sol formulated as described in the invention, results in significant protection against weight loss at 8.5 months of sub-zero storage of lily bulbs.

The effect is in part clearly mediated through ability to do without peat because of effective protection against infection, even after 8.5 months of storage. This is a clear indicator of effective protection through longterm, slow release of effective dosages of conventional fungicides, even when applied at only 1/20^{th} of conventional dose per bulb. The use of coating itself, under these circumstances ads further to the reduction of weight loss.

The resultant higher bulb weights after storage evidently result in higher flower numbers per stem, a clear indicator of the effect of preserved "energy" stores in bulbs / plants, even after 100 days after removal from stores.

## Claims

1. A composition for coating lily bulbs to inhibit degradation of the lily bulbs during storage, which composition comprises a polyvinyl alcohol (PVA) having a molecular weight (Mw) of 4,000-14,000 in an amount of from 15 to 20 % by weight of the composition, glycerol in an amount of from 1 to 5 % by weight of the PVA within the composition and water, the composition being in the form of a sol.

2. The composition according to claim 1, wherein the PVA has a saponification degree of from 50 to 95%.

3. The composition according to claim 1 or 2, further comprising one or more additives selected from the group consisting of anti-biotics, fungicides, pesticides, fertilizers and anti-parasitics.

4. The composition according to any one of the preceding claims, which is essentially free of any volatile alcohol solvents.

5. A method of inhibiting degradation of lily bulbs during storage by applying to the lily bulbs a composition as defined in any one of the claims 1-4 to form a coating.

6. The method according to claim 5, wherein the composition is applied to the lily bulbs by spraying or immersion.

7. The method according to claim 5 or 6, wherein the thickness of the coating is from 20-40 µm.

8. A container for storing lily bulbs, the container surrounding the bulbs and having an open structure with respect to the passing of water and gasses and comprising a coating formed from a composition as defined in any of claims 1-4.

9. The container for storing lily bulbs according to claim 8 wherein the container is a paper bag.

## Patentansprüche

1. Zusammensetzung zum Beschichten von Lilienzwiebeln, um einen Qualitätsverlust der Lilienzwiebeln während der Lagerung zu verhindern, wobei die Zusammensetzung einen Polyvinylalkohol (PVA) mit einer Molekülmasse (M_{R}) von 4.000 bis 14.000 in einer Menge von 15 bis 20 Gewichtsprozent der Zusammensetzung, Glycerol in einer Menge von 1 bis 5 Gewichtsprozent des PVA innerhalb der Zusammensetzung, und Wasser aufweist, wobei die Zusammensetzung die Form einer kolloidalen Lösung aufweist.

2. Zusammensetzung nach Anspruch 1, wobei der PVA einen Verseifungsgrad von 50 bis 95% aufweist.

3. Zusammensetzung nach Anspruch 1 oder 2, die weiterhin einen oder mehrere Zusatzstoffe aufweist, die aus der Gruppe ausgewählt sind, die aus Antibiotika, Fungiziden, Pestiziden, Dünger und Schädlingsbekämpfungsmitteln besteht.

4. Zusammensetzung nach einem der vorangehenden Ansprüche, die im Wesentlichen frei von jeglichem flüchtigen Alkohollösungsmittel ist.

5. Verfahren zur Verhinderung des Qualitätsverlusts von Lilienzwiebeln während der Lagerung, wobei eine Zusammensetzung nach einem der Ansprüche 1 bis 4 auf die Lilienzwiebeln angewendet wird, um eine Beschichtung zu bilden.

6. Verfahren nach Anspruch 5, wobei die Zusammensetzung durch Sprühen oder Eintauchen auf die Lilienzwiebeln angewendet wird.

7. Verfahren nach Anspruch 5 oder 6, wobei die Beschichtungsdicke von 20 bis 40 µm beträgt.

8. Behälter zum Lagern von Lilienzwiebeln, wobei der Behälter die Zwiebeln umgibt und einen offenen Aufbau bezüglich des Durchlasses von Wasser und Gasen aufweist und eine Beschichtung aufweist, die aus einer Zusammensetzung nach einem der Ansprüche 1 bis 4 gebildet ist.

9. Behälter zum Lagern von Lilienzwiebeln nach Anspruch 8, wobei der Behälter eine Papiertüte ist.

## Revendications

1. Composition de revêtement pour bulbes de lys servant à inhiber la dégradation des bulbes de lys pendant le stockage, laquelle composition comprend un alcool polyvinylique (PVA) ayant un poids moléculaire (Mw) de 4 000 à 14 000 en une quantité de 15 à 20 % en poids de la composition, du glycérol en une quantité de 1 à 5 % en poids du PVA présent dans la composition, et de l'eau, la composition étant sous la forme d'un sol.

2. Composition selon la revendication 1, dans laquelle le PVA présente un degré de saponification de 50 à 95 %.

3. Composition selon la revendication 1 ou 2, comprenant en outre un ou plusieurs additifs choisis dans le groupe constitué des antibiotiques, des fongicides, des pesticides, des engrais et des antiparasitaires.

4. Composition selon l'une quelconque des revendications précédentes, qui est essentiellement exempte de solvants volatils à base d'alcool.

5. Procédé d'inhibition de la dégradation des bulbes de lys pendant le stockage par application sur les bulbes de lys d'une composition telle que définie dans l'une quelconque des revendications 1 à 4 pour former un revêtement.

6. Procédé selon la revendication 5, dans lequel la composition est appliquée sur les bulbes de lys par pulvérisation ou immersion.

7. Procédé selon la revendication 5 ou 6, dans lequel l'épaisseur du revêtement est de 20 à 40 µm.

8. Récipient servant à stocker des bulbes de lys, le récipient entourant les bulbes et ayant une structure ouverte permettant à l'eau et aux gaz de passer et comprenant un revêtement formé à partir d'une composition telle que définie dans l'une quelconque des revendications 1 à 4.

9. Récipient servant à stocker des bulbes de lys selon la revendication 8, dans lequel le récipient est un sac en papier.
